# EUROPÄISCHE PATENTSCHRIFT

(11) **EP 2 859 263 B1**
(45) Veröffentlichungstag und Bekanntmachung des Hinweises auf die Patenterteilung: **01.02.2017**
(21) Anmeldenummer: 13729290.0
(22) Anmeldetag: 05.06.2013
(51) Int. Cl.: F16L 25/06, F16L 37/30, F16J 15/00, F16L 29/04, F16L 17/025

(54) **TIEFTEMPERATUR - LEITUNGSKUPPLUNG**
LOW-TEMPERATURE CONDUIT COUPLING
RACCORD DE CONDUITE BASSE TEMPÉRATURE

(30) Priorität: 11.06.2012 DE 102012104990
(43) Veröffentlichungstag der Anmeldung: 15.04.2015
(73) Patentinhaber: Von Keitz, Andreas, 65582 Diez (DE)
(72) Erfinder: Von Keitz, Andreas, 65582 Diez (DE)
(74) Vertreter: Blumbach Zinngrebe
(86) Internationale Anmeldenummer: PCT/EP2013/061597
(87) Internationale Veröffentlichungsnummer: WO 2013/186100

(56) Entgegenhaltungen:
- EP-A1- 0 889 273
- DE-A1- 4 041 337
- DE-A1- 19 724 120
- US-A- 3 842 614
- US-A- 5 265 890
- US-A- 5 363 879
- US-A1- 2004 050 450
- US-A1- 2006 022 464

## Beschreibung

Die Erfindung bezieht sich auf eine Leitungskupplung zur Verbindung einer ersten Leitung mit einer zweiten Leitung zwecks Durchleiten von Tieftemperatur- Medien. Als Medien kommen insbesondere Flüssigerdgas, verflüssigter Sauerstoff, Argon, Äthylen, Propylen, Äthen und andere in Betracht.

Leitungskupplungen enthalten gewöhnlich zwei Kupplungshälften, von denen jede mit Sperreinrichtungen versehen sein kann, um beim Lösen der Kupplung die zugeordnete Leitung sofort zu schließen, um gefördertes Medium am Austritt zu hindern. Beim Kuppeln werden die Sperren gelöst und ein Strömungsweg wird zwischen der ersten und der zweiten Leitung freigegeben.

Aus DE 40 41 337 A1 ist eine Kupplung für Fluide bekannt, die ein aufnehmendes Kupplungsteil mit rohrförmigem Gehäuse und Kegelventil sowie ein eindringendes Kupplungsteil mit rohrförmigem Gehäuse und Kegelventil aufweist, wobei die beiden Kupplungsteile über einen Schraub- oder Bajonettverschluss miteinander verbunden werden können, der ein Steilgewinde aufweist, um das eindringende Kupplungsteil in das aufnehmende Kupplungsteil hinein zu verschieben. Das Kegelventil des aufnehmenden Kupplungsteiles weist einen ortsfesten Ventilkegel und einen federbelastenden nachgiebigen Ventilsitz auf. Der eindringende Kupplungsteil ist am vorderen Ende seines Gehäuses in Form eines Tellerventils ausgebildet, um mit dem beweglichen Ventilsitz des aufnehmenden Kupplungsteiles abdichtend zusammen zu arbeiten und dabei gleichzeitig das Kegelventil des eindringenden Kupplungsteil zu öffnen und den Ventilsitz des aufnehmenden Kupplungsteils relativ zu dem ortsfesten Ventilkegel zu verschieben und dadurch das Kegelventil des aufnehmenden Kupplungsteiles zu öffnen.

Aus US 5 265 890 ist eine Dichtung aus Polytetrafluorethylen bekannt, die durch eine Elastomerfeder an abzudichtende Maschinenelemente ausdrückbar ist.

Wenn mit derartigen Leitungskupplungen Medien bei sehr tiefer Temperatur gehandhabt werden sollen, dann treten diverse Probleme im Zusammenhang mit "Kälteverlust" und gefrierender Feuchtigkeit, auch in Form von Dunst auf. In das Leitungssystem eindringende Wärme kann zur Verdampfung von tiefgekühlter Flüssigkeit führen, wodurch ein erheblicher Druck entsteht. Die gefrierende Nässe kann zu Schwergängigkeit oder sogar Einfrieren der Kupplung führen.

Der Erfindung liegt deshalb die Aufgabe zugrunde, eine Leitungskupplung zur Verbindung von Leitungen vorzuschlagen, durch die auch Tieftemperatur - Medien bei Minimierung der besprochenen Probleme geleitet werden können.

Die Bauweise der neuen Leitungskupplung soll auch für kleinere Baugrößen geeignet sein, wie sie für LKW-Tankwagen oder für kleinere Schiffe benötigt werden.

Die Leitungskupplung weist im Zuge der ersten Leitung eine erste Kupplungshälfte und im Zuge der zweiten Leitung eine zweite Kupplungshälfte auf, die durch Eingriff von Kupplungszapfen in eine Kupplungsnut gekoppelt und verriegelt werden können.

Die erste Kupplungshälfte umfasst ein Tellerventil mit Feder-vorgespanntem Ventilteller, der an einem konischen Ventilsitz anliegt, um normalerweise den Mediendurchgang durch das Ventil abzusperren. Durch Druck gegen die Kraft der Feder kann das Ventil aufgestoßen werden. Das Ventilinnere kann durch eine Wärmedämmschicht gegen eindringende Wärme geschützt werden. Die Wärmedämmschicht kann Polytetrafluoräthylen (PTFE) enthalten, um gute Gleiteigenschaften gegenüber kooperierenden Elementen aufzuweisen, was auch im Falle von Vereisung nützlich ist, da Eis nicht an Polytetrafluoräthylen haftet.

Die zweite Kupplungshälfte weist ein dreiteiliges Gehäuse auf, und zwar ein äußeres rohrförmiges Mantelgehäuse, ein inneres Ventilgehäuse und ein dazwischen angeordnetes glockenförmiges Antriebsgehäuse mit einem Ringabschnitt größeren Durchmessers und einem Rohrabschnitt kleineren Durchmessers. Innerhalb des Ventilgehäuses ist ein neuartiges Ventil angeordnet, das als Kolbenventil oder als Stößelventil bezeichnet werden kann und dessen Ventilstößel in den Rohrabschnitt des Antriebsgehäuses hineinreicht und dort einen Stößelzapfen aufweist, der mit einer Kulissennut des Antriebsgehäuses zusammenarbeitet. Wenn die Kupplungshälften miteinander gekuppelt sind, lässt sich durch Drehen des Antriebsgehäuses der Ventilstößel axial verschieben, wodurch das Tellerventil der ersten Kupplungshälfte aufgestoßen und ein axialer Ringspalt am Stößelventil der zweiten Kupplungshälfte geöffnet wird, so dass der Mediendurchgang von der ersten zur zweiten Leitung durchgeschaltet ist.

Der axiale Ringspalt zwischen Ventilgehäuse und Ventilstößel der zweiten Kupplungshälfte wird in der Schließstellung des Ventils von einem Kolben abgedichtet, der, neben einem Kolbenkörper, von einer (ersten) Spreizlippendichtung, gegebenenfalls in Unterstützung durch eine Schnurringdichtung, gebildet wird. Die Spreizlippendichtung enthält einen ringförmigen Dichtkörper mit Dichtlippe aus einem ausreichend elastischen Material bei tiefen Temperaturen und eine Spreizringfeder, die die Dichtlippe radial nach außen gegen die Wandung des Ventilgehäuses drängt. Auf diese Weise wird gewährleistet, dass auch bei tiefen Temperaturen der axiale Ringspalt zwischen Ventilgehäuse und Ventilstößel abgedichtet wird, wobei die axiale Stellung des Ventilstößels in einem gewissen Verschiebebereich des Kolbens im Hinblick auf Abdichtung unkritisch ist. (Dies steht im Gegensatz zur Abdichtung mit einem Ventilteller, der genau am konischen Ventilsitz anliegen muss, um abzudichten.)

Als Material des ringförmigen Dichtkörpers mit Dichtlippe der Spreizlippendichtung wird Polytetrafluoräthylen oder ein PTFE-haltiger Werkstoff oder ein Material mit ähnlichen Eigenschaften bevorzugt. Solches Material ist bei tiefen Temperaturen noch ausreichend elastisch und löst sich leicht von Eisschichten, die sich in Folge von Feuchtigkeit und unter tiefer Temperatur am Ventil bilden könnten. Als PTFE-haltige Werkstoffe können insbesondere Kompositmaterialien, wie etwa ein PTFE/Graphit-Werktstoff verwendet werden.

Überall, wo es bei der Tieftemperatur -Leitungskupplung axiale Ringspalte gibt, werden bevorzugt Spreizlippendichtungen der beschriebenen Bauart verwendet. Dies bezieht sich auf den axialen Ringspalt zwischen dem vorstehenden Ende des Ventilgehäuses der zweiten Kupplungshälfte und den dieses Ende umgreifenden Kupplungsflansch der ersten Kupplungshälfte. Eine weitere Stelle für eine Spreizlippendichtung findet sich zwischen dem inneren Flanschende des Ventilgehäuses und dem dieses Ende übergreifenden Antriebsgehäuse. Auch in einem Ringspalt zwischen Mantelgehäuse und Antriebsgehäuse kann eine Spreizlippendichtung angeordnet werden.

Bei dem Tellerventil der ersten Kupplungshälfte gibt es eine Vorspannungsfeder, welche das konische Dichtelement gegen den konischen Ventilsitz drängt. Hier wird vorteilhaft eine Presslippendichtung aus Polytetrafluoräthylen, einem PTFE-haltigen Werkstoff oder einem gleichartigen Werkstoff angewandt.

Um die Ventilstößel des in der zweiten Kupplungshälfte angeordneten Stößelventils in die Offenstellung und in die Geschlossenstellung zu verschieben, wird ein Kulissengetriebe mit einer schraubenförmigen Kulissennut und mit einem in diese eingreifenden Stößelzapfen benutzt, der am Ventilstößel angebracht ist, der wiederum in axialer Richtung geführt ist. Die Kulissennut ist in dem Antriebsgehäuse untergebracht und der Stößelzapfen kann eine Achse mit Rollen an deren Enden darstellen. Wenn die Kupplungshälften miteinander gekuppelt und verriegelt sind, wird das (zuvor freie) Ende des Ventilgehäuses durch Eingriff am Gehäuse des Tellerventils festgehalten, und die axiale Führung am Stößelventil gibt dem Ventilstößel eine axiale Längsbewegung vor, die durch die Übersetzung der Drehbewegung des Antriebsgehäuses in eine Längsbewegung des Ventilstößels in Folge des Kulissengetriebes erzeugt wird. Bei seiner axialen Längsbewegung stößt der Ventilstößel gegen das Tellerventil und öffnet dieses entgegen der Kraft der Vorspannungsfeder des Tellerventils. Gleichzeitig wandert bei der Verschiebung des Ventilstößels die mitgeführte Spreizlippendichtung aus dem Ringspalt zwischen Ventilgehäuse und Stößel heraus, der Ringspalt wird frei und ermöglicht den Durchgang von Medien durch beide Ventile.

Das Innere beider Ventile kann durch Wärmedämmschichten gegen Eindringen der Wärme geschützt werden. Darüber hinaus können Spalte, die zwischen bewegten Teilen der Leitungskupplung existieren, mit einer gut gleitfähigen Oberfläche versehen werden. Polytetrafluoräthylen oder allgemeiner ein PTFE-haltiger Werkstoff, wie etwa auch ein PTFE/Graphit-Kompositmaterial eignet sich als Material mit guten Gleiteigenschaften und auch zur Wärmedämmung. Feuchtigkeitsniederschlag wird gehemmt und Eisbildung leicht von der Oberfläche abgelöst. Das Einfrieren der Leitungskupplung wird so vermieden.

Ein Ausführungsbeispiel der Erfindung wird anhand der Zeichnungen beschrieben. Dabei zeigt:
Fig. 1 einen Längsschnitt durch eine erste Kupplungshälfte,
Fig. 2 einen Längsschnitt durch eine zweite Kupplungshälfte,
Fig. 3 einen Längsschnitt durch eine Spreizlippendichtung, und
Fig. 4 eine Ansicht eines Ventilstössels der zweiten Kupplungshälfte.

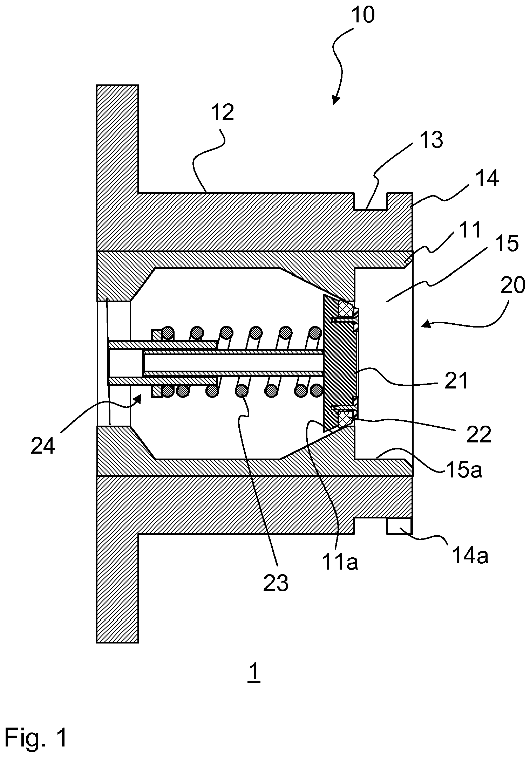

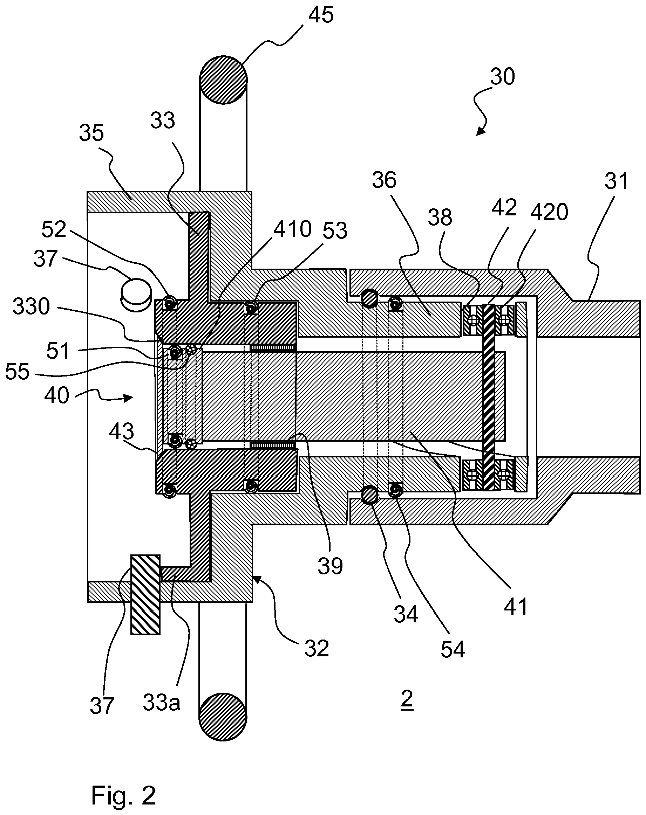

Die Leitungskupplung setzt sich aus einer ersten Kupplungshälfte 1 (Fig. 1) und einer zweiten Kupplungshälfte 2 (Fig. 2) zusammen. Links von der ersten Kupplung 1 ist ein erster Leitungszug (nicht dargestellt) angeschlossen und rechts von der Kupplungshälfte 2 ist eine zweite Leitung (nicht dargestellt) angeschlossen. Die erste Kupplungshälfte 1 umfasst ein rohrförmiges Gehäuse 10 und ein Tellerventil 20. Die zweite Kupplungshälfte umfasst ein dreiteiliges Gehäuse 30, ein Kolbenventil oder Stößelventil 40 und einen Handantrieb 45.

Das rohrförmige Gehäuse 10 der ersten Kupplungshälfte 1 umfasst einen Ventilsitzteil 11, der einen konischen Ventilsitz 11a enthält und als eine Wärmedämmschicht um das Innere des Ventils ausgebildet sein kann, und einen äußeren Rohrstutzen 12, der am linken Ende zum Anschluss an die erste Leitung und am rechten Ende zum Anschluss an die zweite Kupplungshälfte 2 mit einer Kupplungsnut 13 und einem Kupplungsflansch 14 ausgebildet ist. Am rechten Ende des Gehäuses 10 ist ferner ein Kupplungshohlraum 15 vorhanden, der mit einem gut gleitfähigen Material wie Polytetrafluoräthylen oder einem PTFE-haltigen Werkstoff ausgestattet ist und eine zylindrische Innenfläche 15a aufweist. Das Tellerventil 20 umfasst einen Ventilteller 21 mit einer konischen Presslippendichtung 22, die aus Polytetrafluoräthylen, PTFE-haltigem Material oder einem gleichartigen Material besteht und an den konischen Ventilsitz 11a durch eine Vorspannungsfeder 23 gepresst wird. Eine Ventilführung 24 sorgt für gute axiale Führung des Ventiltellers 21.

Das Gehäuse 30 der zweiten Kupplungshälfte 2 umfasst ein rohrförmiges Mantelgehäuse 31, ein glockenförmiges Antriebsgehäuse 32 und ein Ventilgehäuse 33, die zwiebelartig ineinander geschachtelt sind. Das Antriebsgehäuse 32 ist mittels Kugellager 34 oder einer anderen geeigneten Lagerung in dem Mantelgehäuse 31 drehbar gelagert. Mantelgehäuse 31 und Antriebsgehäuse 32 sind mittels einer Spreizlippendichtung 54 gegeneinander abgedichtet. Bei der dargestellten Ausführungsform dichtet die Spreizlippendichtung 54 dabei die Innenseite des Mantelgehäuses und die Aussenseite des Antriebsgehäuses gegeneinander ab. Die Glockenform des Antriebsgehäuses 32 ergibt sich aus einem Ringabschnitt 35 größeren Durchmessers und einem Rohrabschnitt 36 kleineren Durchmessers, die über einen Scheibenabschnitt miteinander verbunden sind. Der Ringabschnitt 35 ist mit einem reibungsvermindernden Material wie Polytetrafluoräthylen oder einem PTFE-haltigen Werkstoff, wie etwa ein PTFE/Graphit-Komposit ausgekleidet und umgibt das Ventilgehäuse 33. Der Rohrabschnitt 36 des Antriebsgehäuses 32 ist mit einer Wärmedämmschicht versehen, die auf der Basis von Polytetrafluoräthylen aufgebaut sein kann. Im Inneren des Ringabschnittes 35 befinden sich Kupplungszapfen 37, die durch Führungsnuten 14a (Fig. 1) hindurch in die Kupplungsnut 13 beim Kuppeln der Kupplungshälften praktiziert werden. Gleichzeitig greifen Fortsätze 33a des Ventilgehäuses 33 in die Führungsnuten 14a, um das Ventilgehäuse 33 gegen Drehung festzulegen.

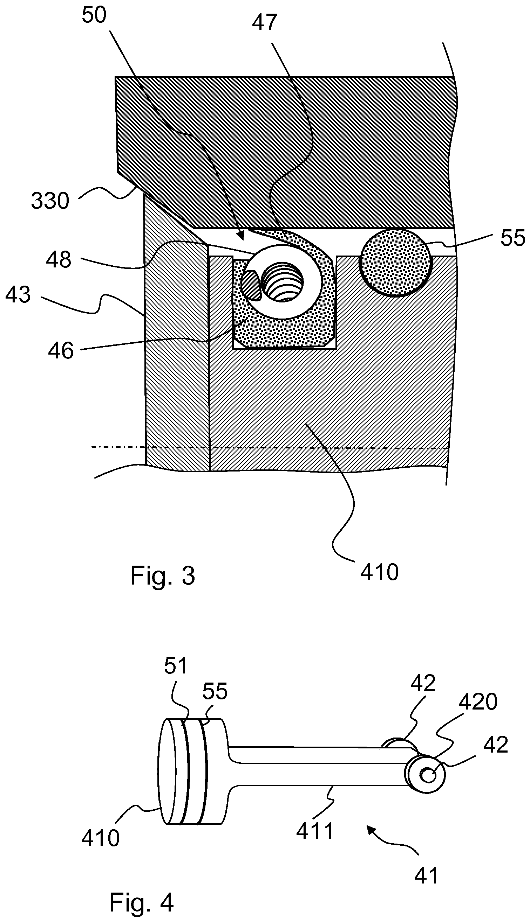

Das Kolben- oder Stößelventil 40 umfasst einen Ventilstößel 41 mit Kolbenkörper 410 (Fig. 4), der mittels eines Kulissengetriebes in axialer Richtung verschiebbar ist. Das Kulissengetriebe umfasst eine schraubenförmige Kulissennut 38 im rohrförmigen Abschnitt 36 des Antriebsgehäuses 32, und einen Stößelzapfen 42 in Form einer sich quer zum Stößel erstreckenden Achse mit Rollen 420 an den Achsenden. Die Rollen 420 werden in der Kulissennut 38 geführt. Zu dem Kulissengetriebe zählt noch eine Stößellängsführung 39 am Ventilgehäuse 33. Ein kegelförmiger Anschlag 43 begrenzt die Verschiebebewegung des Ventilstößels 41 in der Geschlossenstellung des Ventils, während die andere Endstellung, welche die Offenstellung des Ventils darstellt, durch die Kulissennut 38 vorgegeben wird. Der Antrieb des Kulissengetriebes erfolgt über ein Handrad 45, das das Antriebsgehäuse 32 zu drehen ermöglicht.

Fig. 4 zeigt perspektivisch eine Ausführungsform des Ventilstößels 41. Wie anhand von Fig. 4 ersichtlich, umfasst der Ventilstößel 41 einen Kolbenkörper 410 und eine plattenförmige Stösselstange 411. Der Stößelzapfen 42 erstreckt sich in der Mittenebene der plattenförmigen Stösselstange 411 und quer zur Längsrichtung des Ventilstössels 41 an dem dem Kolbenkörper 410 gegenüberliegenden Ende. Durch die plattenförmige Ausführung der Stößelstange wird Strömungsraum gewonnen und eine Längsführung beim Öffnen und Schließen des Stößelventils 40 durch die Stößellängsführung 39 ermöglicht.

Fig. 3 zeigt einen Schnitt durch eine Spreizlippendichtung 50. Diese umfasst einen Dichtungskörper 46 aus Polytetrafluoräthylen oder einem PTFE-haltigen Werkstoff oder einem ähnlichen, bei tiefen Temperaturen noch elastischen Werkstoff, dessen radiales nach außen gerichtetes Ende eine Dichtlippe 47 bildet, und eine zu einem Ring gebogene Schraubenfeder 48 aus Metall, die die Dichtlippe 47 gegen eine glatte Fläche drückt und somit einen Spalt an der Außenseite der Spreizlippendichtung 50 abdichtet.

Eine solche Spreizlippendichtung 51 in Fig. 2 kann allein oder in Zusammenwirken mit einer Ringdichtung 55 einen Kolben bilden, der das Ventilelement des Ventils 40 darstellt, oder als Kolbendichtung für den Kolben 410 dienen. Wenn der Kolben 410 sich in der Ventilbohrung befindet, ist das Ventil geschlossen, und wenn der Kolbenkörper 410 aus der Ventilbohrung herausgefahren worden ist, ist das Ventil geöffnet. Zur erleichterten Herbeiführung der Schließstellung gibt es eine Einführungsschräge 330 für die Dichtungen 51,55 am Eingang zur Ventilbohrung.

Das Gehäuse 30 der zweiten Kupplungshälfte zeigt diverse axial sich erstreckende Ringspalte, die mittels solcher Spreizlippendichtungen 50 abgedichtet sind. Die erste Spreizlippendichtung 51 fungiert als Ventilelement des Ventils 40. Eine zweite Spreizlippendichtung 52 dient zur Abdichtung des Ringspaltes zwischen dem vorderen Ende des Ventilgehäuse 33 und der ringförmigen Innenfläche 15a des Gehäuses 10 der ersten Kupplungshälfte 1. Eine dritte Spreizlippendichtung 53 ist zwischen der Außenseite des inneren Endes des Ventilgehäuses 33 und einer inneren Ringfläche des Ringabschnittes 35 des Antriebsgehäuses 32 gefügt. Eine vierte Spreizlippendichtung 54 befindet sich in einem axialen Ringspalt zwischen dem Mantelgehäuse 31 und dem Antriebsgehäuse 32 im Bereich des rohrförmigen Abschnittes 36. Alle diese Spreizlippendichtungen sorgen dafür, dass Feuchtigkeit möglichst weitgehend vom Inneren der zweiten Kupplungshälfte ferngehalten wird und dass, wenn sich dort Eis niederschlagen sollte, die gute Gleiteigenschaft der Dichtung dafür sorgt, dass das gebildete Eis sich schon bei leichter Querkraft löst. Dadurch wird Schwergängigkeit bei zu erwartendem rauen Betrieb der Leitungskupplung vermieden.

Die Handhabung der Leitungskupplung ist wie folgt:
Es sei angenommen, dass die Kupplungshälfte 1 ortsfest angebracht ist und die Kupplungshälfte 2 sich am Ende eines Schlauches befindet. Die zweite Kupplungshälfte 2 wird mit dem ringförmigen Gehäuseteil 35 über den Flansch 14 der ersten Kupplungshälfte 1 geschoben, wobei das linke Ende des Ventilgehäuses 33 in den Ringraum 15 der ersten Kupplungshälfte gelangt und die Kupplungszapfen 37 durch die Führungnuten 14a hindurch gleiten und bis in die Kupplungsnut 13 gelangen. Gleichzeitig gelangen die Fortsätze 33a des Ventilgehäuses 33 in die Führungsnuten 14a des stationären Gehäuses 10.

Als dann werden die beiden Kupplungshälften durch Drehen am Handrad 45 gegeneinander verriegelt. Weiteres Drehen des Handrades 45 führt zum Antrieb des Kulissengetriebes, wobei der Ventilstößel 41 sich in Fig. 2 nach links verschiebt und dadurch auf das linke Ende des Ventiltellers 21 trifft, der gegen die Kraft der Feder 23 nach links (Fig. 1) verschoben wird. Dadurch wird ein konischer Spalt zwischen der Dichtung 22 und dem Ventilsitz 11a geöffnet, durch den Medium strömen kann. Mit der Verschiebung des Ventilstößels 41 in der Zeichnung nach links wandert der Kolbenkörper 410 zusammen mit der Spreizlippendichtung 51 und der Ringdichtung 55 aus dem axialen Ringspalt zwischen Ventilgehäuse 33 und Ventilstößel 41 heraus, so dass der Durchgang von Medium durch diesen Ringspalt ermöglicht wird. Je nach dem Druckgefälle strömt Medium von der ersten Leitung in die erste Kupplungshälfte und von dort durch die zweite Kupplungshälfte in die zweite Leitung, oder umgekehrt. Die Spreizlippendichtungen 52, 53 und 54 sorgen dafür, dass kein Medium nach außen gelangen kann.

Zum Trennen der Kupplungshälften wird das Handrad 45 in Richtung auf Rückbewegung des Ventilstößels 41 gedreht, wobei die Ringdichtung 55 in die Ventilbohrung des Ventilgehäuses hinein wandert und dabei den Ventilstößel 41 genau axial ausrichtet. Danach gelangt die Spreizlippendichtung 51 in den axialen Ringspalt zwischen Ventilgehäuse 33 und Stößel 41 und dichtet diesen Ringspalt ab. Die Rückzugsbewegung des Stößels 41 wird durch den konischen Anschlag 43 begrenzt. Nunmehr befinden sich die Kupplungszapfen 37 in ihrer Umfangsstellung fluchtend zu den Führungsnuten 14a, so dass die zweite Kupplungshälfte 2 von der ersten Kupplungshälfte 1 abgezogen werden kann. Der Anschlag 43 ist bevorzugt als Formteil aus PTFE ausgebildet und am Ventilstößel 41 befestigt.

Sollte sich wegen des starken Temperaturgefälles zwischen Innen und Außen der Kupplung Eis in Spalten niedergeschlagen haben, dann werden bei der Drehung des Handrades 45 Querkräfte auf das niedergeschlagene Eis ausgeübt, die zum Lösen des Eisfilms von mit Polytetrafluoräthylen oder PTFE-haltigem Material ausgekleideten Dichtstellen führt. Trotz schwieriger, äußerer Bedingungen lässt sich das Gerät einfach bedienen.

## Patentansprüche

1. Leitungskupplung zur Verbindung einer ersten Leitung mit einer zweiten Leitung, um einen Mediendurchgang für Tieftemperatur -Medien zu öffnen oder zu sperren, umfassend:
- eine im Zuge der ersten Leitung angeordnete erste Kupplungshälfte (1), die ein erstes rohrförmiges Gehäuse (10) mit einer äußeren Kupplungsnut (13) aufweist sowie ein Tellerventil (20) mit Feder-vorgespanntem Ventilteller (21) umfasst, der normalerweise den Mediendurchgang absperrt, jedoch aufgestoßen werden kann;
- eine im Zuge der zweiten Leitung angeordnete zweite Kupplungshälfte (2), die auf die erste Kupplungshälfte (1) aufgesetzt werden kann, um einen Kupplungszapfen (37) in die Kupplungsnut (13) der ersten Kupplungshälfte (1) eingreifen zu lassen, wobei die zweite Kupplungshälfte (2) ein zweites, dreiteiliges Gehäuse (30) mit einem rohrförmigem Mantelgehäuse (31), einem glockenförmigen Antriebsgehäuse (32) und einem Ventilgehäuse (33) aufweist sowie ein Stößelventil (40) mit Ventilstößel (41) und Ventilkolben (410) umfasst, der normalerweise den Mediendurchgang durch einen axialen Ringspalt am Ventilgehäuse (33) absperrt, jedoch bei axialer Verschiebung durch das Antriebsgehäuse (32) den Mediendurchgang freigibt, wobei das Antriebsgehäuse (32) unterschiedliche Dreh- Bewegungsstellungen einnehmen kann, um den Kupplungszapfen (37) zum Eingriff in die Kupplungsnut (13) und außer Eingriff zu bringen und um eine am Antriebsgehäuse (32) angebrachte Kulissennut (38) zu drehen und damit einen Stößelzapfen (42) des Stößelventils (40) sowie den Ventilstößel (41) anzutreiben und den Ventilkolben (410) in die Öffnungs- oder Schließstellung zu führen, sowie das Tellerventil (20) der ersten Kupplungshälfte (1) zu betätigen; und
- eine erste Spreizlippendichtung (51), die einen in einer Ringnut des Ventilkolbens (410) angeordneten Dichtungskörper (46) und eine radial nach außen gerichtete Dichtlippe (47) aufweist und als Element des Ventilkolbens (410) den axialen Ringspalt zwischen Ventilgehäuse (33) und Ventilstößel (41) in Abhängigkeit von der Bewegungsstellung des Antriebsgehäuses (32) schließt oder öffnet.

2. Leitungskupplung nach Anspruch 1,
wobei das erste rohrförmige Gehäuse (10) einen radialen Kupplungsflansch (14) mit erster axialer ringförmiger Innenfläche (15) und das Ventilgehäuse (33) der zweiten Kupplungshälfte (2) ein erstes axiales Flanschende umfasst, das eine zweite Spreizlippendichtung (52), passend zur Zusammenarbeit mit der ersten axialen ringförmigen Innenfläche (15), aufweist.

3. Leitungskupplung nach Anspruch 1 oder 2,
wobei das glockenförmige Antriebsgehäuse (32) eine zweite axiale, ringförmige Innenfläche und das Ventilgehäuse (33) ein zweites axiales Flanschende umfasst, das eine dritte Spreizlippendichtung (53), passend zur Zusammenarbeit mit der zweiten axialen, ringförmigen Innenfläche, aufweist.

4. Leitungskupplung nach einem der Ansprüche 1 bis 3,
wobei das Mantelgehäuse (31) der zweiten Kupplungshälfte (2) eine dritte axiale, ringförmige Innenfläche und das Antriebsgehäuse (32) der zweiten Kupplungshälfte (2) eine äußere Ringfläche mit einer vierten Spreizlippendichtung (54) umfasst, die mit der dritten axialen, ringförmigen Innenfläche des Mantelgehäuses (31) zusammenarbeitet.

5. Leitungskupplung nach einem der Ansprüche 1 bis 4,
wobei am Ventilkolben (410) parallel zur ersten Spreizlippendichtung (51) eine Ringdichtung (55) angeordnet ist.

6. Leitungskupplung nach einem der Ansprüche 1 bis 5,
wobei der Ventilteller (21) der ersten Kupplungshälfte (1) eine konische Presslippendichtung (22) aufweist.

7. Leitungskupplung nach einem der Ansprüche 1 bis 6,
wobei am glockenförmigen Antriebsgehäuse (32) der zweiten Kupplungshälfte (2) ein Handrad (45) angebracht ist, um durch Eingriff der Kupplungszapfen (37) in die Kupplungsnut (13) und durch Drehung des Antriebsgehäuses (32) gegenüber dem ersten rohrförmigen Gehäuse (10) die Kupplungshälften zu verriegeln.

8. Leitungskupplung nach einem der Ansprüche 1 bis 7,
wobei die Kulissennut (38) schraubenförmig ausgebildet ist.

9. Leitungskupplung nach einem der Ansprüche 1 bis 8,
wobei der Stößelzapfen (42) als eine mit Rollen versehene Achse ausgebildet ist, die quer zur Bewegungsrichtung des Ventilstößels (41) angeordnet ist.

10. Leitungskupplung nach einem der Ansprüche 1 bis 9,
wobei das glockenförmige Antriebsgehäuse (32) einen Ringabschnitt (35) größeren Durchmessers und einen Rohrabschnitt (36) kleineren Durchmessers aufweist

11. Leitungskupplung nach einem der Ansprüche 1 bis 10,
wobei im Bereich von wenigstens einem der Ringspalte zwischen gegeneinander bewegbaren Geräteelementen sich reibungsmindernde Auskleidungen befinden.

12. Leitungskupplung nach Anspruch 11,
wobei die reibungsmindernden Auskleidungen aus Polytetrafluoräthylen enthaltenden Schichten bestehen.

13. Leitungskupplung nach einem der Ansprüche 1 bis 12,
wobei das rohrförmige Gehäuse (10) der ersten Kupplungshälfte (1) eine Wärmedämmschicht (11) aufweist.

14. Leitungskupplung nach einem der Ansprüche 10 bis 13,
wobei das glockenförmige Antriebsgehäuse (32) der zweiten Kupplungshälfte (2) eine Wärmedämmschicht auf der Innenseite des Ringabschnittes (35) und eine weitere Wärmedämmschicht auf der Außenseite des Rohrabschnittes (36) aufweist.

## Claims

1. A conduit coupling for connecting a first conduit to a second conduit to open or block a medium passage for low temperature media, comprising:
- a first coupling half (1) arranged in the course of the first conduit, which comprises a first tubular housing (10) with an outer coupling groove (13), and a poppet valve (20) with a spring biased valve disk (21) that normally blocks the medium passage but can be pushed open;
- a second coupling half (2) arranged in the course of the second conduit, which can be placed onto the first coupling half (1) to cause a coupling pin (37) to engage in the coupling groove (13) of the first coupling half (1), wherein the second coupling half (2) comprises a second, three-part housing (30) including a tubular jacket housing (31), a bell-shaped drive housing (32) and a valve housing (33), and a stem-actuated valve (40) including a valve stem (41) and a valve piston (410) that normally blocks the medium passage through an axial annular gap on the valve housing (33) but clears the medium passage when being displaced axially by the drive housing (32), wherein the drive housing (32) can take different rotational movement positions in order to cause the coupling pin (37) to engage in and disengage from the coupling groove (13) and to rotate a cam groove (38) provided on the drive housing (32), to thereby drive a stem pin (42) of the stem-actuated valve (40) and the valve stem (41), and to guide the valve piston (410) into the opened or closed position, and to actuate the poppet valve (20) of the first coupling half (1); and
- a first spreading lip seal (51) which has a sealing body (46) disposed in an annular groove of the valve piston (410) and sealing lip (47) facing radially outwards, and which serves as an element of the valve piston (410) to close or open the axial annular gap between the valve housing (33) and the valve stem (41) depending on the movement position of the drive housing (32).

2. The conduit coupling according to claim 1, wherein the first tubular housing (10) comprises a radial coupling flange (14) having a first axial annular inner surface (15), and wherein the valve housing (33) of the second coupling half (2) comprises a first axial flange end which has a second spreading lip seal (52) suitable for cooperating with the first axial annular inner surface (15).

3. The conduit coupling according to claim 1 or 2, wherein the bell-shaped drive housing (32) comprises a second axial annular inner surface, and wherein the valve housing (33) comprises a second axial flange end which has a third spreading lip seal (53) suitable for cooperating with the second axial annular inner surface.

4. The conduit coupling according to any one of claims 1 to 3, wherein the jacket housing (31) of the second coupling half (2) comprises a third axial annular inner surface, and wherein the drive housing (32) of the second coupling half (2) comprises an outer annular surface having a fourth spreading lip seal (54) which cooperates with the third axial annular inner surface of the jacket housing (31).

5. The conduit coupling according to any one of claims 1 to 4, wherein a ring seal (55) is arranged on the valve piston (410) in parallel to the first spreading lip seal (51).

6. The conduit coupling according to any one of claims 1 to 5, wherein the valve disk (21) of the first coupling half (1) has a conical pressing lip seal (22).

7. The conduit coupling according to any one of claims 1 to 6, wherein a hand wheel (45) is mounted on the bell-shaped drive housing (32) of the second coupling half (2) for locking the coupling halves by engaging the coupling pins (37) in the coupling groove (13) and by rotating the drive housing (32) with respect to the first tubular housing (10).

8. The conduit coupling according to any one of claims 1 to 7, wherein the cam groove (38) is a helical groove.

9. The conduit coupling according to any one of claims 1 to 8, wherein the stem pin (42) is formed as a shaft provided with rollers, which is arranged transversely to the movement direction of the valve stem (41).

10. The conduit coupling according to any one of claims 1 to 9, wherein the bell-shaped drive housing (32) has a ring portion (35) of a larger diameter and a tubular portion (36) of a smaller diameter.

11. The conduit coupling according to any one of claims 1 to 10, wherein friction reducing linings are provided in the region of at least one of the annular gaps between device elements that are movable relative to each other.

12. The conduit coupling according to claim 11, wherein the friction reducing linings consist of layers containing polytetrafluoroethylene.

13. The conduit coupling according to any one of claims 1 to 12, wherein the tubular housing (10) of the first coupling half (1) has a thermal barrier coating (11).

14. The conduit coupling according to any one of claims 10 to 13, wherein the bell-shaped drive housing (32) of the second coupling half (2) has a thermal barrier coating on the inner surface of the ring portion (35) and a further thermal barrier coating on the outer surface of the tubular portion (36).

## Revendications

1. Raccord de conduite permettant de relier une première conduite à une deuxième conduite, afin d'ouvrir ou de fermer un passage de milieux pour des milieux à basse température, comprenant :
- une première moitié de raccord (1) agencée dans le prolongement de la première conduite, laquelle moitié comprend un premier carter tubulaire (10) présentant une rainure d'accouplement extérieure (13) et comporte une soupape à disque (20) présentant une tête de soupape (21) précontrainte par un ressort, laquelle ferme généralement le passage de milieux, mais peut être ouverte ;
- une deuxième moitié de raccord (2) agencée dans le prolongement de la deuxième conduite, laquelle moitié peut être mise en place sur la première moitié de raccord (1), afin de pouvoir insérer un tourillon d'accouplement (37) dans la rainure d'accouplement (13) de la première moitié de raccord (1), la deuxième moitié de raccord (2) comportant un deuxième carter (30) en trois parties pourvu d'un carter enveloppant tubulaire (31), d'un carter d'entraînement en forme de cloche (32) et d'un carter de soupape (33) et comportant une soupape à poussoir (40) pourvue d'un poussoir de soupape (41) et d'un piston de soupape (410), qui ferme généralement le passage de milieux au moyen d'une fente annulaire axiale sur le carter de soupape (33), mais libère le passage de milieux lors d'un déplacement axial par le carter d'entraînement (32), le carter d'entraînement (32) pouvant occuper différentes positions de déplacement en rotation, afin d'amener le tourillon d'accouplement (37) à s'insérer dans la rainure d'accouplement (13) et à l'en sortir et afin d'amener en rotation une rainure à coulisse (38) ménagée sur le carter d'entraînement (32) et donc d'entraîner un tourillon de poussoir (42) de la soupape à poussoir (40) ainsi que le poussoir de soupape (41) et de guider le piston de soupape (410) dans la position d'ouverture ou de fermeture, et d'actionner la soupape à disque (20) de la première moitié de raccord (1) ; et
- un premier joint à lèvre à expansion (51), qui comprend un corps de joint (46) agencé dans une rainure annulaire du piston de soupape (410) et une lèvre d'étanchéité (47) orientée radialement vers l'extérieur et qui, en tant qu'élément du piston de soupape (410), ferme ou ouvre la fente annulaire axiale entre le carter de soupape (33) et le poussoir de soupape (41) en fonction de la position de mouvement du carter d'entraînement (32).

2. Raccord de conduite selon la revendication 1,
dans lequel le premier carter tubulaire (10) présente une bride d'accouplement radiale (14) pourvue d'une première surface intérieure annulaire axiale (15) et le carter de soupape (33) de la deuxième moitié de raccord (2) comporte une première extrémité de bride axiale, qui comprend un deuxième joint à lèvre à expansion (52), adapté à coopérer avec la première surface intérieure annulaire axiale (15).

3. Raccord de conduite selon la revendication 1 ou 2,
dans lequel le carter d'entraînement en forme de cloche (32) comprend une deuxième surface intérieure annulaire axiale et le carter de soupape (33) comprend une deuxième extrémité de bride axiale, qui comporte un troisième joint à lèvre à expansion (53), adapté à coopérer avec la deuxième surface intérieure annulaire axiale.

4. Raccord de conduite selon l'une quelconque des revendications 1 à 3,
dans lequel le carter enveloppant (31) de la deuxième moitié de raccord (2) comporte une troisième surface intérieure annulaire axiale et le carter d'entraînement (32) de la deuxième moitié de raccord (2) comporte une surface annulaire extérieure présentant un quatrième joint à lèvre à expansion (54), qui coopère avec la troisième surface intérieure annulaire axiale du carter enveloppant (31).

5. Raccord de conduite selon l'une quelconque des revendications 1 à 4,
dans lequel un joint annulaire (55) est agencé sur le piston de soupape (410) parallèlement au premier joint à lèvre à expansion (51).

6. Raccord de conduite selon l'une quelconque des revendications 1 à 5,
dans lequel la tête de soupape (21) de la première moitié de raccord (1) comprend un joint à lèvre à pression (22) conique.

7. Raccord de conduite selon l'une quelconque des revendications 1 à 6,
dans lequel un volant (45) est monté sur le carter d'entraînement en forme de cloche (32) de la deuxième moitié de raccord (2), afin de verrouiller les moitiés de raccord à la suite de l'insertion des tourillons d'accouplement (37) dans la rainure d'accouplement (13) et à la suite de la rotation du carter d'entraînement (32) par rapport au premier carter tubulaire (10).

8. Raccord de conduite selon l'une quelconque des revendications 1 à 7,
dans lequel la rainure à coulisse (38) est hélicoïdale.

9. Raccord de conduite selon l'une quelconque des revendications 1 à 8,
dans lequel le tourillon de poussoir (42) est réalisé sous la forme d'un axe pourvu de rouleaux, qui est agencé transversalement au sens de mouvement du poussoir de soupape (41).

10. Raccord de conduite selon l'une quelconque des revendications 1 à 9,
dans lequel le carter d'entraînement en forme de cloche (32) présente une section annulaire (35) de plus grand diamètre et une section tubulaire (36) de plus petit diamètre.

11. Raccord de conduite selon l'une quelconque des revendications 1 à 10,
dans lequel des revêtements diminuant la friction sont situés dans la zone d'au moins une des fentes annulaires entre des éléments d'appareil mobiles les uns par rapport aux autres.

12. Raccord de conduite selon la revendication 11, dans lequel les revêtements diminuant la friction sont constitués de couches contenant du polytétrafluoréthylène.

13. Raccord de conduite selon l'une quelconque des revendications 1 à 12,
dans lequel le carter tubulaire (10) de la première moitié de raccord (1) comprend une couche d'isolation thermique (11).

14. Raccord de conduite selon l'une quelconque des revendications 10 à 13,
dans lequel le carter d'entraînement en forme de cloche (32) de la deuxième moitié de raccord (2) comprend une couche d'isolation thermique sur la face intérieure de la section annulaire (35) et une autre couche d'isolation thermique sur la face extérieure de la section tubulaire (36).
